# EUROPEAN PATENT SPECIFICATION

(11) **EP 3 811 770 B1**
(45) Date of publication and mention of the grant of the patent: **19.06.2024**
(21) Application number: 19837825.9
(22) Date of filing: 18.07.2019
(51) Int. Cl.: F25D 17/04, F25D 29/00, A23B 7/148, A23L 3/3418

(54) **STORAGE SYSTEM**
SPEICHERSYSTEM
SYSTÈME DE STOCKAGE

(30) Priority: 20.07.2018 JP 2018136484
(43) Date of publication of application: 28.04.2021
(73) Proprietor: DAIKIN INDUSTRIES, LTD., Osaka-Shi, Osaka 530-0001 (JP)
(72) Inventor: TOMITA, Chiharu, Osaka-shi, Osaka 530-8323 (JP); KAMEI, Noritaka, Osaka-shi, Osaka 530-8323 (JP); MABUCHI, Shougo, Osaka-shi, Osaka 530-8323 (JP)
(74) Representative: Hoffmann Eitle
(86) International application number: PCT/JP2019/028287
(87) International publication number: WO 2020/017595

(56) References cited:
- EP-A1- 0 353 021
- EP-A1- 0 368 678
- EP-A1- 3 045 844
- WO-A1-2015/032905
- WO-A1-2017/038055
- WO-A2-2011/130087
- JP-A- H08 168
- JP-A- H0 692 408
- JP-A- H02 122 189
- JP-A- S62 198 333
- JP-A- 2010 246 475
- JP-A- 2018 054 333
- US-A- 5 332 547
- US-A- 5 649 995
- US-A- 5 872 721

## Description

### TECHNICAL FIELD

The present disclosure relates to a storage system.

### BACKGROUND ART

Some of known storage systems include a CA system provided in a storeroom to adjust the oxygen concentration and carbon dioxide concentration of air in an internal space of the storeroom (see, for example, Patent Document 1). The CA system typically performs control to regulate the composition of air in the internal space using respective values detected by an oxygen sensor and a carbon dioxide sensor. The oxygen sensor and carbon dioxide sensor are installed in the internal space of the storeroom.
Patent Document 2 relates to a method for transporting a quantity of a comestible which may be subject to degradation as a result of respiration during transportation. Patent Document 3 relates to a device for maintaining a controlled atmosphere within a sealed container. Patent Document 4 relates to a nitrogen generation control system. Patent Document 5 relates to an apparatus for storing produce under controlled conditions. Patent Document 6 relates to a technique for producing a gas mixture for controlling an oxygen concentration in the interior of a container while reducing the overall weight of the apparatus. Patent Document 7 relates to controlling the oxygen concentration and the carbon dioxide concentration and monitoring the temperature in shipping and storage containers for perishables. Patent Document 8 relates to adaptive control of compressor discharge pressure. Patent Document 9 relates to a fresh matter storage device.

### CITATION LIST

### PATENT DOCUMENT

Patent Document 1: Japanese Unexamined Patent Publication No. S55-165142
Patent Document 2: EP 0 353 021 A1
Patent Document 3: US 5 332 547 A
Patent Document 4: US 5 649 995 A
Patent Document 5: EP 0 368 678 A1
Patent Document 6: EP 3 045 844 A1
Patent Document 7: US 5 872 721 A
Patent Document 8: WO 2011/130087 A2
Patent Document 9: JP H02 122189 A

### SUMMARY OF THE INVENTION

### TECHNICAL PROBLEM

For example, if, while control is performed such that air in the internal space of the storeroom is maintained at low oxygen concentration, an operator is about to enter the internal space, an operation for maintaining the air in the internal space at low oxygen concentration needs to be finished, and a determination needs to be made in advance that the oxygen concentration in the internal space is equivalent to that in the atmosphere.

However, if a failure of the oxygen sensor installed in the internal space causes an indication error, the oxygen concentration in the internal space cannot be checked. This may cause problems, such as a problem in which a door of the storeroom may be opened without checking the oxygen concentration and a problem in which the operator may enter the internal space to perform an operation, such as maintenance of the sensor, without checking the oxygen concentration.

It is an object of the present disclosure to provide a configuration including a CA system that adjusts the composition of air in an internal space of a storeroom and solving the problems caused by a failure of an oxygen sensor or a carbon dioxide sensor.

### SOLUTION TO THE PROBLEM

The present invention is defined by the independent claims. Preferred embodiments are defined by the dependent claims. Further examples are provided for facilitating the understanding of the invention. A first aspect of the present disclosure is directed to a storage system including: a storeroom (10); and an inside air control system (20) that regulates a composition of inside air in the storeroom (10). The inside air control system (20) includes a concentration sensor (33) that detects a concentration of a component of the inside air.

The storage system according to the first aspect is characterized in that the concentration sensor (33) is disposed outside the storeroom (10), and that the storage system has an air passage (48, 54) that communicates with an internal space (S) of the storeroom (10) and the concentration sensor (33).

A second aspect of the present disclosure is an embodiment of the first aspect. In the second aspect, the concentration sensor (33) include one or both of an oxygen sensor (33a) that detects an oxygen concentration of the inside air and a carbon dioxide sensor (33b) that detects a carbon dioxide concentration of the inside air.

In the first and second aspects, the inside air in the storeroom (10) is supplied to the concentration sensor (33) installed outside the storeroom (10). The oxygen concentration and carbon dioxide concentration of the inside air are detected outside the storeroom (10). Thus, if a failure of the concentration sensor (33) causes an indication error, the concentration sensor (33) can undergo maintenance outside the storeroom. After the maintenance, the oxygen concentration and carbon dioxide concentration in the internal space (S) can be checked. This configuration allows reduction in problems, such as a problem in which the operator carelessly opens the door of the storeroom (10) or carelessly enters the internal space (S).

A third aspect of the present disclosure is an embodiment of the first or second aspect. In the third aspect, the air passage (48) includes an introduction passage (47) through which the inside air is introduced into the concentration sensor (33), and a return passage (46) through which air is returned from the concentration sensor (33) to the internal space (S).

In the third aspect, even in a situation such as a situation where the inside air has a low oxygen concentration or a high carbon dioxide concentration, the inside air supplied to the concentration sensor (33) is returned through the return passage (46) into the storeroom, thereby substantially preventing the operator from inhaling such inside air.

A fourth aspect of the present disclosure is an embodiment of the third aspect. In the fourth aspect, the return passage (46) is connected to a water discharge tube (74) through which drain water is discharged to outside the storeroom.

In the fourth aspect, if drain water is produced in the return passage (46), the drain water is discharged through the return passage (46). This discharge allows reduction in "clogging" of the return passage (46).

A fifth aspect of the present disclosure is an embodiment of the third or fourth aspect. In the fifth aspect, an internal fan (15) is provided in the internal space (S), an opening (47a) of the introduction passage (47) inside the storeroom is disposed adjacent to an air blowout end of the internal fan (15), and an opening (46a) of the return passage (46) inside the storeroom is disposed adjacent to an air suction end of the internal fan (15).

In the fifth aspect, the inside air is supplied from the air blowout end of the internal fan (15) through the introduction passage (47) to the concentration sensor (33), and is returned from the concentration sensor (33) through the return passage (46) to the air suction end of the internal fan (15). This allows air to flow smoothly through the introduction passage (47) and the return passage (46).

A sixth aspect of the present disclosure is an embodiment of the fifth aspect. In the sixth aspect, the inside air control system (20) includes a control unit (31) that performs control to regulate the composition of the inside air, and the control unit (31) performs control to regulate the composition of the inside air based on a value detected by the concentration sensor (33) and an associated target value. The value detected is obtained after a preset time period has elapsed since activation of the internal fan (15).

In the sixth aspect, the composition of the inside air is regulated using the value detected by the concentration sensor (33) after a preset time period has elapsed since the activation of the internal fan (15). Thus, the control is performed based on the value detected while a determination is made that the oxygen concentration and carbon dioxide concentration of the inside air have been uniformly distributed, thereby stabilizing operation of the inside air control system (20).

A seventh aspect of the present disclosure is an embodiment of the first or second aspect. In the seventh aspect, the air passage (54) includes: an introduction passage (55) through which the inside air is introduced into the concentration sensor (33); and a discharge passage (56) through which air is discharged from the concentration sensor (33) to an external space (O).

In the seventh aspect, the inside air is supplied through the introduction passage (47) to the concentration sensor (33), and the oxygen concentration or carbon dioxide concentration of the supplied air are detected. Thereafter, the air is discharged through the discharge passage (46) to the outside of the storeroom. For example, if the internal space (S) has a higher pressure than the external space (O), the inside air is pushed to the external space (O).

An eighth aspect of the present disclosure is an embodiment of the seventh aspect. In the eighth aspect, the system may further include: an external fan (57) disposed outside the storeroom (10). An air outflow opening (56a) of the discharge passage (56) may be disposed adjacent to an air suction end of the external fan (57).

In the eighth aspect, rotation of the external fan (57) allows inside air to flow from the internal space (S) to the external space (O). During this flow, the oxygen concentration or carbon dioxide concentration is detected.

A ninth aspect of the present disclosure is an embodiment of the seventh aspect. In the ninth aspect, a sensor fan (58) that sends air to the concentration sensor (33) is disposed proximate to the concentration sensor (33), and an air outflow opening (55a) of the introduction passage (55) is disposed adjacent to an air suction end of the sensor fan (58).

In the ninth aspect, rotation of the sensor fan (58) allows inside air to flow from the internal space (S) through the vicinity of the concentration sensor (33) to the external space (O). During this flow, the oxygen concentration or carbon dioxide concentration is detected.

A tenth aspect of the present disclosure is an embodiment of the seventh aspect. In the tenth aspect, the system further includes: an electric component box (30); and a ventilation valve (24) for use to ventilate an internal space of the electric component box (30). The concentration sensor (33) is disposed inside the electric component box (30), and the introduction passage (55) passes through the ventilation valve (24).

In the tenth aspect, the pressure difference between the internal space (S) and the external space (O) allows inside air to flow from the internal space (S) through the vicinity of the concentration sensor (33) to the external space (O). During this flow, the oxygen concentration and the carbon dioxide concentration are detected.

An eleventh aspect of the present disclosure is an embodiment of any one of the first to ninth aspects. In the eleventh aspect, the system further includes: an electrical component box (30). The concentration sensor (33) is disposed inside the electric component box (30).

In the eleventh aspect, the electric component box (30) includes therein various electronic components, and thus has a relatively high temperature. If the concentration sensor (33) is installed inside the storeroom (10), the storeroom (10) having a low internal temperature may cause problems, such as condensation on the concentration sensor (33). However, the concentration sensor (33) installed in the electric component box (30) can reduce problems of condensation.

A twelfth aspect of the present disclosure is an embodiment of any one of the first to eleventh aspects. In the twelfth aspect, the system further includes: a refrigerator (60) that cools the internal space (S) of the storeroom (10).

In the twelfth aspect, in a configuration in which the inside air in the storeroom (10) is cooled with the refrigerator (60), the oxygen concentration or carbon dioxide concentration of the inside air can be detected outside the storeroom. This detection reduces the influence of condensation and other phenomena.

A thirteenth aspect of the present disclosure is an embodiment of any one of the first to twelfth aspects. In the thirteenth aspect, the system further includes: a lock (50) fitted to a door of the storeroom (10); and a locking-unlocking mechanism (51) that locks the door if a value detected by the concentration sensor (33) reaches a predetermined concentration of an associated component of the inside air in which the door is locked, and that unlocks the door if the value detected reaches a predetermined concentration of the associated component of the inside air in which the door is unlocked.

In the thirteenth aspect, if the inside air has an excessively low oxygen concentration or an excessively high carbon dioxide concentration, the door is locked, whereas if the oxygen concentration or carbon dioxide concentration is appropriate, the door can be unlocked.

### BRIEF DESCRIPTION OF THE DRAWINGS

[FIG. 1] FIG. 1 is a block diagram illustrating a configuration of a storage system according to a first embodiment.
[FIG. 2] FIG. 2 is a block diagram illustrating a configuration of a storage system according to a second embodiment.
[FIG. 3] FIG. 3 is a piping system diagram illustrating a configuration of a refrigerant circuit of a refrigerator.
[FIG. 4] FIG. 4 is a block diagram illustrating a configuration of a storage system according to a third embodiment.
[FIG. 5] FIG. 5 is a block diagram illustrating a configuration of a storage system according to a first variation of the third embodiment.
[FIG. 6] FIG. 6 is a block diagram illustrating a configuration of a storage system according to a second variation of the third embodiment.
[FIG. 7] FIG. 7 is a block diagram illustrating a configuration of a storage system according to a third variation of the third embodiment.

### DESCRIPTION OF EMBODIMENTS

### «First Embodiment»

A first embodiment will be described below.

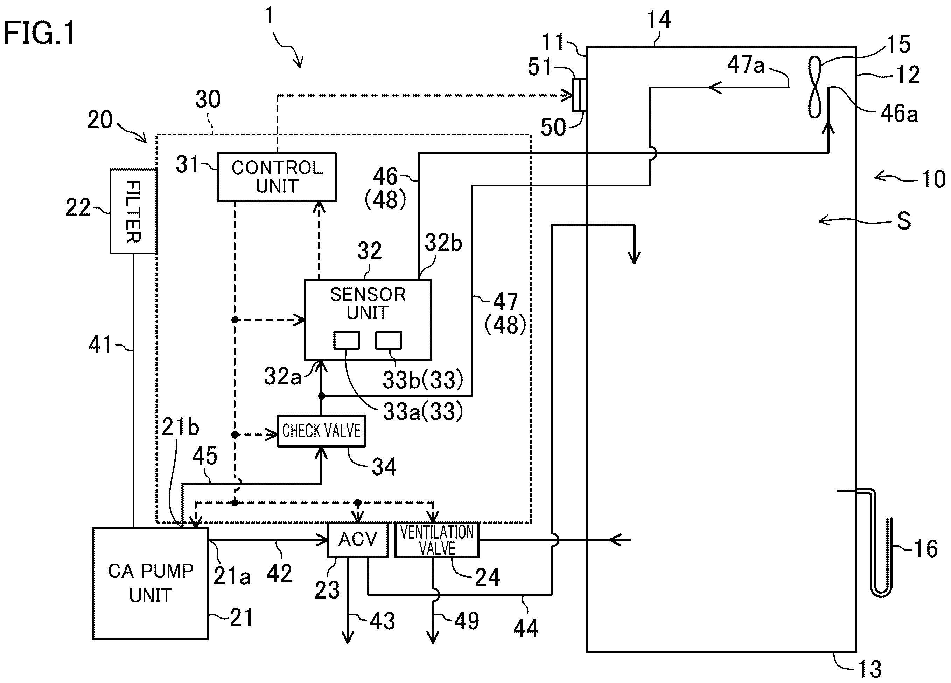

This first embodiment relates to a storage system (1) capable of regulating the oxygen concentration and carbon dioxide concentration of air in an internal space (S) of a storeroom (10) formed by prefabricated panels assembled together. As shown in FIG. 1, the storage system (1) includes the storeroom (10) and a controlled atmosphere (CA) system (inside air control system) (20). The CA system (20) includes a pump unit (21) and an electric component box (control box) (30). The storeroom (10) contains, for example, plants, such as vegetables, which breathe by absorbing oxygen (Oz) in the air and releasing carbon dioxide (COz). The CA system (20) regulates the composition of inside air in the storeroom so that air in the internal space (S) of the storeroom (10) has a low oxygen concentration. This regulation reduces respiration of the plants to keep them fresh.

The storeroom (10) is formed by prefabricated panels assembled together as described above. These prefabricated panels include a front panel (11), a back panel (12), a right-side panel (not illustrated), a left-side panel (not illustrated), a bottom panel (13), and a top panel (14). The storeroom (10) may have assembled at a factory or any other site, or may be formed by prefabricated panels assembled together on the spot. For example, the front panel (11) of the storeroom (10) includes a single or double-leaf door (not illustrated) through which vegetables and other plants are put in, and taken out of, the internal space (S).

The CA system (20) adjusts the oxygen concentration and carbon dioxide concentration of the inside air in the storeroom (10), although its features will not be described in detail. The pump unit (21) of the CA system (20) includes an air circuit (not illustrated) connected to an air pump. The air circuit is connected to a plurality of air flow paths, and includes circuit components, such as an adsorbent for adsorbing a nitrogen component in the air and a switching valve for switching the flow direction of the air in an associated one of the air flow paths. The air circuit may include, instead of the adsorbent, a separation membrane separating oxygen and carbon dioxide from the air.

A control unit (31) of the electric component box (30) controls operation of the pump unit (21). The control unit (31) controls the pump unit (21) to perform a concentration regulation operation for regulating the oxygen concentration and carbon dioxide concentration of the inside air in the storeroom (10) to desired concentrations, respectively. Specifically, the control unit (31) controls the operation of the CA system (20) based on measurement results obtained by concentration sensors (33) of a sensor unit (32) so that the composition (oxygen concentration and carbon dioxide concentration) of the inside air in the storeroom (10) are controlled to a desired target composition (e.g., 5% oxygen and 5% carbon dioxide). The gas generated in the CA system (20) is then supplied into the internal space (S) of the storeroom (10).

Specifically, the control unit (31) performs control to regulate the composition of the inside air based on values detected by the concentration sensors (33) and their target values. The detected values are obtained after a preset time period has elapsed since the activation of an internal fan (15) described below and the oxygen concentration and carbon dioxide concentration of the inside air have been uniformly distributed.

The control unit (31) includes a microcomputer controlling various components of the CA system (20), and a memory or a hard disk storing executable control programs. Note that a detailed structure and algorithm of the control unit (31) may be comprised of a combination of any kind of hardware and software that can implement the functions of the CA system (20).

The storage system (1) includes an oxygen sensor (33a) and a carbon dioxide sensor (33b) as the concentration sensors (33) each of which detects the concentration of a component of the inside air. The oxygen sensor (33a) detects the oxygen concentration of the inside air. The carbon dioxide sensor (33b) detects the carbon dioxide concentration of the inside air. The oxygen sensor (33a) and the carbon dioxide sensor (33b) are housed in the single sensor unit (32), and are installed inside the electric component box (30) disposed outside the storeroom (10). The oxygen sensor (33a) may be, for example, a galvanic cell-type sensor. The carbon dioxide sensor (33b) may be, for example, a non-dispersive infrared sensor.

A filter box (22) housing an air-permeable, waterproof membrane filter, for example, is provided on an outer surface of the electric component box (30). The filter box (22) is connected through an outside air supply tube (41) to a suction port of the air pump of the pump unit (21). In this embodiment, the "tube" is not a rigid member (pipe), but a flexible tube.

A first gas outflow port (21a) of the pump unit (21) is connected through a first gas supply tube (42) to an air control valve (23). The air control valve (23) may be, for example, a three-way valve. The air control valve (23) is connected to a gas release tube (43) opening into the atmosphere and an air supply tube (44) that communicates with the internal space (S) of the storeroom (10). A low-oxygen-concentration gas or any other gas which has flowed through the first gas supply tube (42) into the air control valve (23) and which has had its composition regulated flows out of the air control valve (23) to one or both of the gas release tube (43) and the air supply tube (44) with the ratio between the flow rate of the gas through the gas release tube (43) and the flow rate of the gas through the air supply tube (44) adjusted.

A second gas outflow port (21b) of the pump unit (21) is connected to one end of a second gas supply tube (45). The other end of the second gas supply tube (45) is connected through a check valve (34) to an inflow port (32a) of the sensor unit (32) in the electric component box (30). The check valve (34) allows a gas to flow from the pump unit (21) toward the sensor unit (32), and disallows a gas to flow in the reverse direction. The sensor unit (32) measures the oxygen concentration and carbon dioxide concentration of the gas supplied thereto.

An outflow port (32b) of the sensor unit (32) is connected to an inlet end of a return tube (46) (return passage). The return tube (46) forms part of the second gas supply tube (45). An outlet end (an opening inside the storeroom) (46a) of the return tube (46) is disposed in the internal space (S) of the storeroom (10). A gas that has flowed out of the sensor unit (32) flows through the return tube (46), and is then supplied into the internal space (S) of the storeroom (10). The internal space (S) of the storeroom (10) includes the internal fan (15) proximate to the outlet end of the return tube (46). Specifically, the outlet end of the return tube (46) is disposed adjacent to an air suction end of the internal fan (15) (in a primary space of the internal fan (15)).

The first gas supply tube (45) is connected to one end (outlet end) of an introduction tube (47) (introduction passage) through which inside air is introduced from the internal space (S) into the sensor unit (32), between the sensor unit (32) and the check valve (34). The other end of the introduction tube (47), i.e., an inlet end (47a) thereof (an opening inside the storeroom), is disposed adjacent to an air blowout end of the internal fan (15) (a secondary space of the internal fan (15)). The introduction tube (47) through which inside air is introduced into the sensor unit (32) and the return tube (46) through which inside air is returned from the sensor unit (32) into the internal space (S) form a concentration detection air passage (48) communicating with the internal space (S) of the storeroom (10) and the concentration sensors (33) (the oxygen sensor (33a) and the carbon dioxide sensor (33b)) of the sensor unit (32).

A ventilation valve (24) is attached to the outer surface of the electric component box (30). The ventilation valve (24) is connected to an intermediate portion of a ventilation tube (49). The ventilation tube (49) has one end opening in the storeroom (10), and the other end opening into the atmosphere.

The door of the storeroom (10) is provided with a lock (50) that prevents the door from opening while air in the internal space (S) has a low oxygen concentration or in a similar situation, and a locking-unlocking mechanism (50) that locks and unlocks the door. The locking-unlocking mechanism (50) is connected to the control unit (31) of the electric component box (30), and locks and unlocks the door through the control unit (31). Specifically, if the values detected by the concentration sensors (33) are each reaches a predetermined concentration of an associated component of the inside air in which the door is locked (e.g., an oxygen concentration range of 17% or lower and a carbon dioxide concentration range of 3% or higher), the door is locked. On the other hand, if the values detected by the concentration sensors (33) are each within a predetermined concentration range of an associated component of the inside air in which the door is unlocked (e.g., an oxygen concentration range of 19% or higher and a carbon dioxide concentration range of 1% or lower), the door is unlocked.

The storeroom (10) is provided with a water column gauge (16) to detect an abnormal increase in the pressure of the internal space (S) of the storeroom (10).

### -Operation-

In the first embodiment, activation of the CA system allows outside air to pass through the filter box (22) and to be taken into the pump unit (21). In the pump unit (21), a supply gas that has its oxygen concentration and carbon dioxide concentration regulated is produced through the adsorbent or the separation membrane. This gas is supplied through the first gas supply tube (42) and the air supply tube (44) into the internal space (S) of the storeroom (10). Upon the activation or at any other timing, a gas may be supplied from the pump unit (21) through the second gas supply tube (45) into the storeroom.

The oxygen concentration and carbon dioxide concentration of the inside air are respectively detected by the concentration sensors (33) of the sensor unit (32). At this timing, the second gas outflow port (21b) is closed to block the gas flow from the pump unit (21) toward the second gas supply tube (45). The inside air is supplied through the introduction tube (47) to the concentration sensors (33) of the sensor unit (32), and the oxygen concentration and carbon dioxide concentration of the inside air are detected outside the storeroom (10). The inside air that has passed through the concentration sensors (33) is returned through the return passage (46) into the internal space (S) of the storeroom (10). While the oxygen concentration and carbon dioxide concentration of the inside air are detected in the foregoing manner, the pump unit (21) is operated. The control unit (31) continues to control the pump unit (21) so that the inside air has an intended composition.

Unless the concentration sensors (33) are abnormal, the foregoing operation is performed. However, if the concentration sensors (33) are abnormal, the concentrations may be indicated in error, or may be prevented from being indicated. Thus, an operator or any other person may be prevented from determining the oxygen concentration and carbon dioxide concentration in the internal space (S). In such a case, the concentration sensors (33) installed in the internal space (S) could prevent the oxygen concentration and carbon dioxide concentration in the internal space (S) from being checked. As a result, the operator may open the door of the storeroom, or may enter the internal space (S) to perform an operation, such as maintenance of the sensors, without checking the oxygen concentration and carbon dioxide concentration. However, in this embodiment, the concentration sensors (33) are installed inside the electric component box (30) outside the storeroom (10). Thus, the concentration sensors (33) can undergo maintenance outside the storeroom (10). Thus, after the concentration sensors (33) that have undergone maintenance operate normally, and the oxygen concentration and carbon dioxide concentration in the internal space (S) are checked, the operator merely needs to open the door of the storeroom (10).

### - Advantages of First Embodiment -

In this embodiment, the storage system includes the storeroom (10) and the inside air control system (20) that regulates the composition of inside air in the storeroom (10). The inside air control system (20) includes the concentration sensors (33) that detect the concentrations of the associated components of the inside air. In this storage system, the oxygen sensor (33a) and carbon dioxide sensor (33b), which are the concentration sensors (33), are disposed outside the storeroom (10). The storage system has the concentration detection air passage (48) communicating with the internal space (S) of the storeroom (10) and the concentration sensors (33).

In the configuration, the inside air in the storeroom (10) is supplied to the concentration sensors (33) installed outside the storeroom (10), and the oxygen concentration and carbon dioxide concentration of the inside air are detected outside the storeroom (10). Thus, if a failure of the concentration sensors (33) causes an indication error, the concentration sensors can undergo maintenance outside the storeroom (10). After the maintenance, the oxygen concentration and carbon dioxide concentration in the internal space (S) can be checked. Thus, this embodiment can reduce problems, such as a problem in which the operator carelessly opens the door of the storeroom (10) or carelessly enters the internal space (S).

In this embodiment, the concentration detection air passage (48) includes the introduction passage (47) through which inside air is introduced into the concentration sensors (33), and the return passage (46) through which air is returned from the concentration sensors (33) into the internal space (S). Thus, even in a situation such as a situation where the inside air has a low oxygen concentration or a high carbon dioxide concentration (e.g., an oxygen concentration of 17% or lower and a carbon dioxide concentration of 3% or higher), the inside air supplied to the concentration sensors (33) is returned through the return passage (46) into the storeroom. Thus, such inside air can be substantially prevented from being inhaled by the operator.

In this embodiment, the internal fan (15) is provided in the internal space (S), the opening (47a) of the introduction passage (47) inside the storeroom is disposed adjacent to the air blowout end of the internal fan (15), and the opening (46a) of the return passage (46) inside the storeroom is disposed adjacent to the air suction end of the internal fan (15). Thus, the inside air is supplied from the air blowout end of the internal fan (15) through the introduction passage (47) to the concentration sensors (33), and is returned from the concentration sensors (33) through the return passage (46) to the air suction end of the internal fan (15). This configuration allows air to flow smoothly through the introduction passage (47) and the return passage (46). Thus, even if the concentration sensors (33) are provided outside the storeroom (10), the reduction in the detection accuracy can be avoided.

In this embodiment, the control unit (31) of the inside air control system (20) performs control to regulate the composition of the inside air based on values detected by the concentration sensors (33) and their target values. The detected values are obtained after a preset time period has elapsed since the activation of the internal fan (15). Thus, this embodiment allows control for regulating the composition of the inside air to be performed based on the detected values obtained in a state where a determination is made that the oxygen concentration and carbon dioxide concentration in the internal space (S) have been uniformly distributed. This control stabilizes an operation of the inside air control system (20).

In this embodiment, the concentration sensors (33) are disposed inside the electric component box (30). The electric component box (30) includes therein various electronic components, and thus has a relatively high temperature. If the concentration sensors (33) are installed inside the storeroom (10), the storeroom (10) having a low internal temperature may cause problems, such as condensation on the concentration sensors (33). However, in this embodiment, the concentration sensors (33) installed in the electric component box (30) can reduce problems of condensation.

In this embodiment, the lock (50) is fitted to the door of the storeroom (10), and the locking-unlocking mechanism (51) is provided. The locking-unlocking mechanism (51) locks the door if the values detected by the concentration sensors (33) are each within a predetermined concentration range of an associated component of the inside air in which the door is locked (e.g., an oxygen concentration range of 17% or lower and a carbon dioxide concentration range of 3% or higher), and unlocks the door if the values detected by the concentration sensors (33) are each within a predetermined concentration range of an associated component of the inside air in which the door is unlocked (e.g., an oxygen concentration range of 19% or higher and a carbon dioxide concentration range of 1% or lower). Thus, this embodiment prevents the door from opening while the internal space (S) has a low oxygen concentration or a high carbon dioxide concentration. This can reduce problems, such as a problem in which the operator carelessly opens the door of the storeroom (10) or carelessly enters the internal space (S). Thus, the door can be opened only when air in the internal space (S) has an appropriate concentration.

### «Second Embodiment»

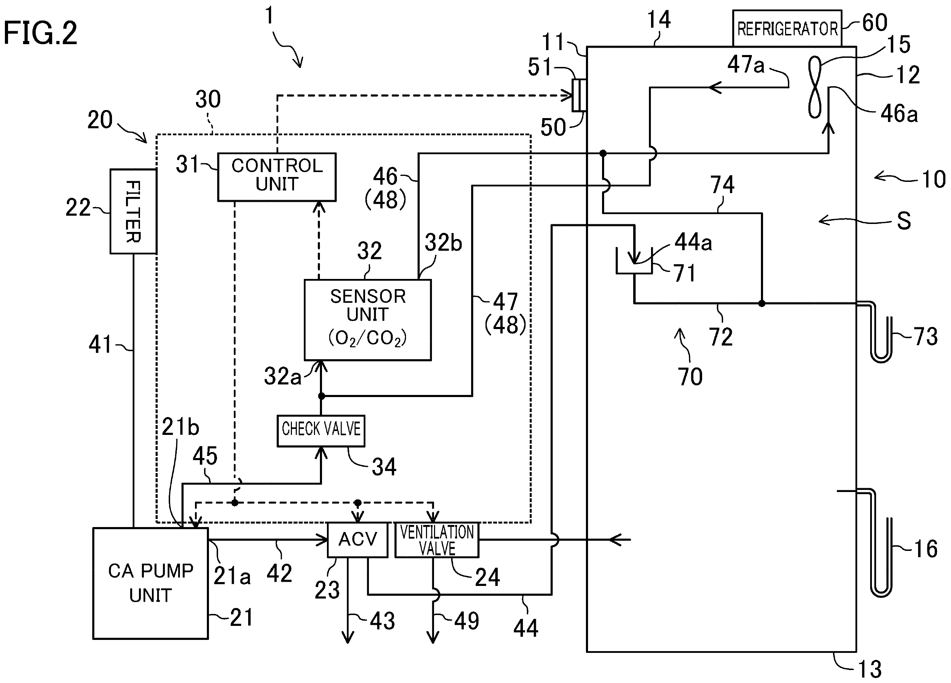

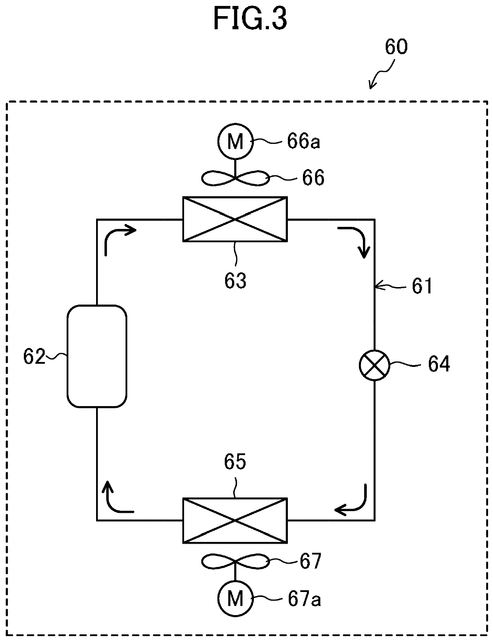

A second embodiment shown in FIGS. 2 and 3 will be described below.

The second embodiment is an example in which the storage system (1) according to the first embodiment further includes a refrigerator (cooling unit) (60) that cools the internal space (S) of the storeroom (10).

The refrigerator (60) includes a refrigerant circuit (61) shown in FIG. 3. The refrigerant circuit (61) is a closed circuit in which a compressor (62), a condenser (radiator) (63), an expansion valve (64), and an evaporator (65) are connected together in this order through refrigerant pipes.

A condenser fan (66) is disposed proximate to the condenser (63). The condenser fan (66) is driven in rotation by a first fan motor (66a), and sends the air outside the storeroom (10) (i.e., outside air) to the condenser (63). In the condenser (63), heat is exchanged between a refrigerant compressed in the compressor (62) and flowing through the condenser (63) and the outside air sent to the condenser (63) by the external fan (66).

An evaporator fan (67) is disposed proximate to the evaporator (65). The evaporator fan (26) is driven in rotation by a second fan motor (67a), and blows the inside air toward the evaporator (65). In the evaporator (65), heat is exchanged between a refrigerant having a pressure dropped by the expansion valve (64) and flowing through the evaporator (65) and the inside air sent to the evaporator (65) by the evaporator fan (67). Thus, the inside air is cooled.

The evaporator (65) and the evaporator fan (67) may be installed in a casing of the refrigerator (60). The inside air in the storeroom (10) may be taken into the casing, cooled, and then returned into the internal space (S). Alternatively, the evaporator (65) and the evaporator fan (67) may be installed in the internal space (S) of the storeroom (10). The internal space (S) may be cooled while the inside air is circulated through the evaporator (65).

In this second embodiment, an air supply tube (44) has an open end (44a) inside the internal space (S). The open end (44a) is disposed above a condensate container (71). The bottom of the condensate container (71) is connected to one end of a condensate discharge tube (72). The other end of the condensate discharge tube (72) is connected to a U-shaped drain tube (73) disposed outside the storeroom (10). The condensate discharge tube (72) is connected through a water discharge tube (74) to a portion of a return tube (46) extending inside the internal space (S) to discharge drain water (condensate). A condensate discharging section (70) is configured in the foregoing manner. This allows condensate produced, due to the low temperature of the internal space (S), from a gas supplied into the internal space (S) or a gas returned from the high-temperature electric component box (30) through the return tube (46) to the internal space (S) to be discharged to the outside of the storeroom.

The other configurations are the same as, or similar to, those of the first embodiment.

In this embodiment, the refrigerator (60) is operated to circulate a refrigerant through the refrigerant circuit (61). During this circulation, the refrigerant dissipates heat to outside air in the condenser (63), and absorbs heat from the inside air in the evaporator (65). Thus, the internal space (S) is cooled.

The CA system (20) performs an operation that is the same as, or similar to, that of the first embodiment. Specifically, the CA system (20) maintains each of the oxygen concentration and carbon dioxide concentration of the inside air within an associated predetermined range around an associated desired concentration (e.g., 5% oxygen and 5% carbon dioxide).

If the concentration sensors (33) are abnormal, the concentrations may be indicated in error, or may be prevented from being indicated. Thus, an operator or any other person may be prevented from determining the oxygen concentration and carbon dioxide concentration in the internal space (S). However, in this embodiment, the concentration sensors (33) are installed inside the electric component box (30) outside the storeroom (10). Thus, the concentration sensors (33) can undergo maintenance outside the storeroom (10). The concentration sensors (33) operating normally allow the oxygen concentration and carbon dioxide concentration in the internal space (S) to be checked. Thus, the operator merely needs to open the door after this check.

### - Advantages of Second Embodiment -

This second embodiment exhibits the following advantages in addition to those described in the first embodiment.

In the second embodiment, the condensate container (71) is provided below the open end (44a) of the air supply tube (44) in the storeroom (10), and condensate accumulated in the condensate container can be discharged through the condensate discharge tube (72) to the outside of the storeroom. This discharge can prevent the humidity of the internal space (S) from increasing excessively. The water discharge tube (74) through which drain water (condensate) is discharged to the outside of the storeroom has two ends respectively connected to the return tube (46) and the condensate discharge tube (72). This connection allows reduction in "clogging" of the return tube (46).

In particular, this second embodiment is directed to a system in which the refrigerator (60) provided for the storeroom (10) cools the internal space (S). Air supplied from the CA system (20) through the air supply tube (44) into the internal space (S) and air circulating through the concentration detection air passage (48) between the internal space (S) and the sensor unit (32) are cooled to facilitate condensation. However, condensate can be spontaneously discharged. Also in this second embodiment, the oxygen concentration and carbon dioxide concentration of the inside air can be detected outside the storeroom. This reduces the influence of condensation on the concentration sensors (33).

### «Third Embodiment»

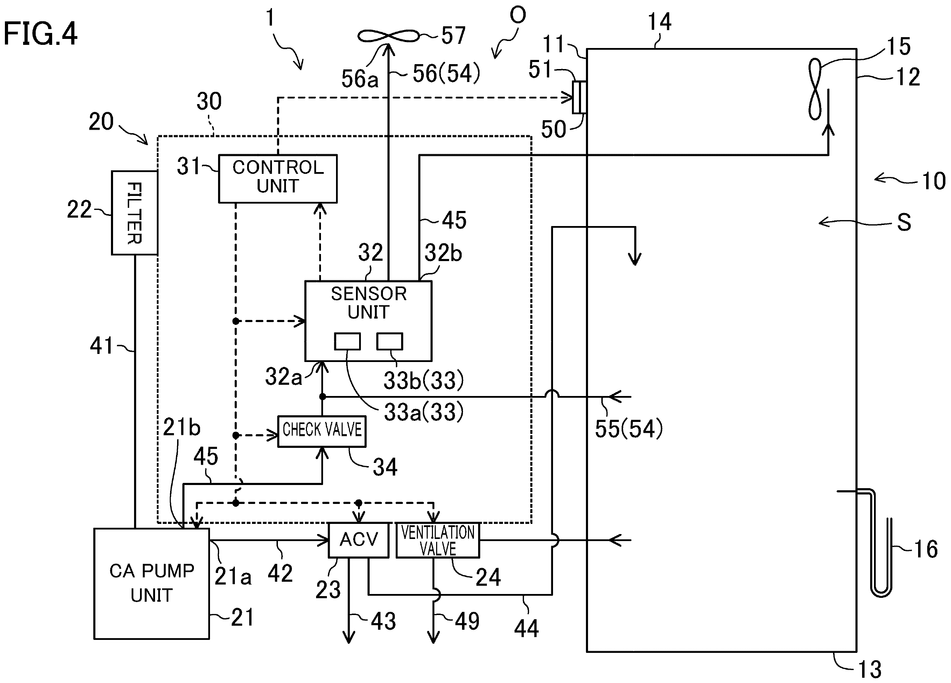

A third embodiment shown in FIG. 4 will be described below.

The third embodiment is an example in which a channel for air passing from an internal space (S) of a storeroom (10) through a sensor unit (32) has a different configuration from that of the first embodiment.

An air passage (54) according to the third embodiment is configured as an introduction passage (55) through which inside air is introduced into concentration sensors (33). A storage system (1) according to this third embodiment further includes a discharge passage (56) through which air is discharged from the concentration sensors (33) to an external space (O). The "external space" as used herein refers to a space outside both of the storeroom (10) and a CA system (20). The introduction passage (55) has one end opening in the internal space (S) of the storeroom (10), and the other end connected to a second gas supply tube (45) between the sensor unit (32) and a check valve (34). In this third embodiment, the introduction tube (47) according to the first embodiment is not provided.

The discharge passage (56) has one end connected to the sensor unit, and the other end opening into the external space (O). The other end of the discharge passage (56) is an air outflow opening, which is disposed adjacent to an air suction end of an external fan (57) disposed outside the storeroom (10).

The other components of this third embodiment are configured just like the first embodiment.

The CA system (20) according to this third embodiment performs an operation substantially similar to that of the first embodiment. Specifically, a pump unit (21) of the CA system (20) produces a supply gas that has its oxygen concentration and carbon dioxide concentration regulated. This gas is supplied through the second gas supply tube (45) into the internal space (S) of the storeroom (10). This supply allows each of the oxygen concentration and carbon dioxide concentration of the inside air to be maintained within an associated predetermined range around an associated desired concentration (e.g., 5% oxygen and 5% carbon dioxide).

The oxygen concentration and carbon dioxide concentration of the inside air are detected by the concentration sensors (33) in the sensor unit (32) while the external fan (57) rotates to allow the inside air to flow through the introduction passage (55), the sensor unit (32), and the discharge passage (56).

If the concentration sensors (33) are abnormal, the concentrations may be indicated in error, or may be prevented from being indicated. Thus, an operator or any other person may be prevented from determining the oxygen concentration and carbon dioxide concentration in the internal space (S). However, also in this third embodiment, the concentration sensors (33) are installed inside the electric component box (30) in the external space (O) outside the storeroom (10). Thus, the concentration sensors (33) can undergo maintenance outside the storeroom (10). The concentration sensors (33) operating normally after the maintenance allow the oxygen concentration and carbon dioxide concentration in the internal space (S) to be checked. Thus, the operator merely needs to open the door after this check.

In this third embodiment, the storage system (1) includes the introduction passage (55) through which the inside air is introduced into the concentration sensors (33) outside the storeroom, and the discharge passage (56) through which air is discharged from the concentration sensors (33) to the external space (O). Thus, the concentration sensors (33) can undergo maintenance outside the storeroom, and even if the concentration sensors (33) are provided outside the storeroom (10), the reduction in the detection accuracy can be avoided. Such advantages similar to those of the first embodiment are exhibited.

### - Variation of Third Embodiment -

### <First Variation>

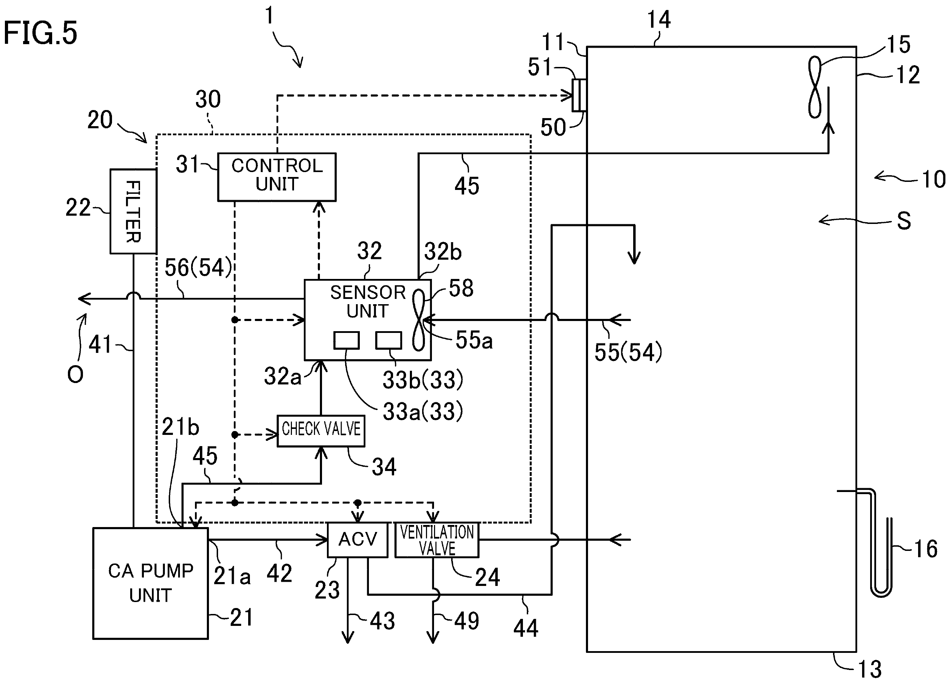

A first variation of the third embodiment shown in FIG. 5 is an example in which an introduction passage (55) and a discharge passage (56) are configured to be different from those of the third embodiment shown in FIG. 4.

In this first variation, a casing of a sensor unit (32) includes therein a sensor fan (58). The introduction passage (55) has one end opening in an internal space (S) of a storeroom (10), and the other end (air outflow opening) disposed adjacent to an air suction end of the sensor fan (58) provided in the sensor unit (32). The discharge passage (56) has one end connected to a casing of the sensor unit (32), and the other end opening into an external space (O), i.e., a space outside both of the storeroom (10) and a CA system (20).

The other configurations are the same as, or similar to, those of the third embodiment shown in FIG. 4.

In this first variation, rotation of the sensor fan (58) allows inside air to be sucked into the sensor unit (32). The oxygen concentration and carbon dioxide concentration of the inside air sucked are detected. Thereafter, the air is discharged through the discharge passage (58) to the external space (O).

Even with such a configuration of this first variation, advantages similar to those of the third embodiment shown in FIG. 4 are exhibited.

### <Second Variation>

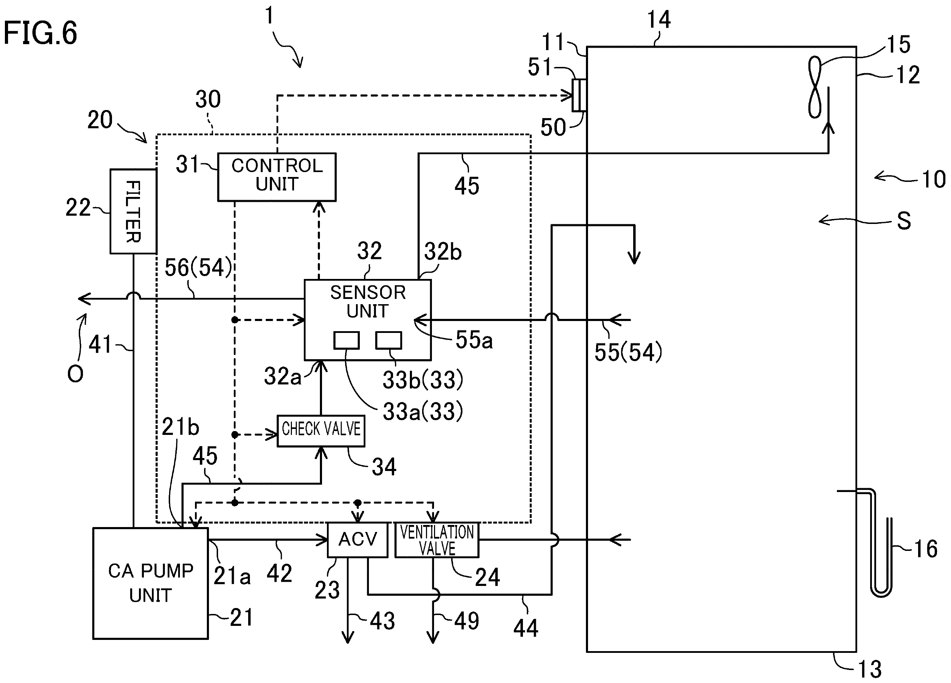

A second variation of the third embodiment shown in FIG. 6 is an example in which an air channel including an introduction passage (55) and a discharge passage (56) is configured to be different from that of the first variation shown in FIG. 5.

In this second variation, sending air from a pump unit (21) into an internal space (S) of a storeroom (10) allows the pressure of the internal space (S) to be controlled to a positive pressure. Thus, the internal space (S) has a higher pressure than an external space (O). This creates a pressure difference between the internal space (S) and each of the external space (O) and a space in a sensor unit (32) communicating with the external space (O). However, the sensor fan (58) shown in FIG. 5 is not provided. An air outflow opening of the introduction passage (55) is disposed proximate to the concentration sensors (33).

The other configurations including the discharge passage (56) are the same as, or similar to, those of the first variation shown in FIG. 5.

In this second variation, the internal space (S) has a higher pressure than the external space (O). Thus, inside air is pushed through the introduction passage (55) to the sensor unit (32), and is then discharged to the external space (O). During such flow of the inside air, the oxygen concentration and carbon dioxide concentration of the inside air are detected in the sensor unit (32).

Even with such a configuration of this second variation, advantages similar to those of each of the third embodiment shown in FIG. 4 and the first variation shown in FIG. 5 are exhibited using the pressure difference between the internal space (S) and the external space (O) without using the sensor fan (58).

### <Third Variation>

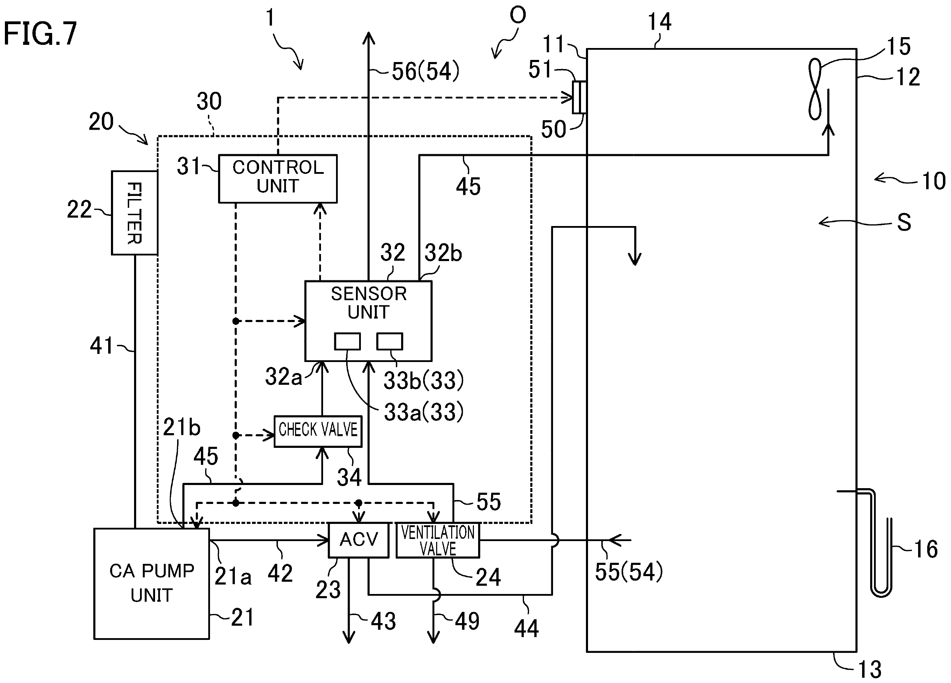

A third variation of the third embodiment shown in FIG. 7 is an example in which an introduction passage (55) and a discharge passage (56) are configured to be different from those of the third embodiment shown in FIG. 4.

In this third variation, one end of the introduction passage (55) is opening into an internal space (S) of a storeroom (10). The other end of the introduction passage (55) is connected to a sensor unit (32) disposed inside an electric component box (30) and including concentration sensors (33). The introduction passage (55) passes through a ventilation valve (24) that is fitted to the electric component box (30) to ventilate the internal space of the electric component box (30), and allows air to flow therethrough while the ventilation valve (24) is open. The discharge passage (56) has one end connected to a casing of the sensor unit (32), and the other end opening into an external space (O). Also in this third variation, the pressure of the internal space (S) of the storeroom (10) is controlled to a positive pressure. Thus, the internal space (S) has a higher pressure than each of the external space (O) and a space in the sensor unit (32) communicating with the external space (O).

In this third variation, the internal space (S) has a higher pressure than the space in the sensor unit (32) including the concentration sensors (33). Thus, while the ventilation valve (24) is open, the inside air is pushed through the introduction passage (55) to the space in the sensor unit (32). The oxygen concentration and carbon dioxide concentration of the inside air are detected in the sensor unit (32). The air in the sensor unit (32) is then discharged to the outside of the storeroom.

Also in this third variation, advantages similar to those of the second variation shown in FIG. 6 are exhibited using the pressure difference between the internal space (S) and the external space (O).

### <Fourth Variation>

The air passage (54) according to each of the third embodiment and the first to third variations thereof is an altered version of the air passage (48) of the first embodiment. The air passage (48) of the second embodiment may be replaced with the air passage (54) according to each of the third embodiment and the first to third variations thereof.

### <<Other Embodiments>>

The foregoing embodiments may also be configured as follows.

In the foregoing embodiments, a storage system used for a stationary storeroom (10) formed by prefabricated panels has been described. However, the model of the storeroom according to each of the foregoing embodiments is merely an example. This storage system may be used for a container (movable storeroom) for use in, for example, overland transport and marine transport.

In the foregoing embodiments, both the oxygen sensor (33a) that detects the oxygen concentration of the inside air and the carbon dioxide sensor (33b) that detects the carbon dioxide concentration of the inside air are used as the concentration sensors (33). However, any one of them may be used. A concentration sensor (33) except the oxygen sensor (33a) and the carbon dioxide sensor (33b) may be used depending on a target stored in the storeroom (10) and other factors.

The concentration sensors (33) do not always need to be provided in the electric component box (30), and merely need to be installed outside the storeroom (10). In the second embodiment, if the concentration sensors (33) are installed in the electric component box (30), the electric component box (30) may contain electric components of the refrigerator (60).

In the foregoing embodiments, the return passage (46) from the sensor unit (32) is allowed to communicate with the internal space (S) of the storeroom (10) to return a gas whose concentration has been detected to the internal space (S). However, controlling the pressure of the internal space (S) to a positive pressure may allow the gas returned to the internal space (S) to be released to the outside of the storeroom.

In the first embodiment, the opening (47a) of the introduction tube (47) inside the storeroom is disposed adjacent to the air blowout end of the internal fan (15), and the opening (46a) of the return tube (46) inside the storeroom is disposed adjacent to the air suction end of the internal fan (15). However, the arrangement of these tubes may be modified.

For example, in the second embodiment, the water discharge tube (74) through which condensate is discharged to the outside may be configured to allow condensate to be directly discharged to the outside of the storeroom without being connected to the condensate discharge tube (72).

The control unit (31) performs control to regulate the composition of the inside air based on values detected by the concentration sensors (33) and their target values. The detected values are obtained after a preset time period has elapsed since the activation of the internal fan (15) and the concentration distribution has become stable. However, this control may be altered as appropriate.

In the foregoing embodiments, the concentration sensors (33) are disposed inside the electric component box (30). However, the arrangement of these sensors may be modified.

In the foregoing embodiments, the locking-unlocking mechanism (50) is provided. The locking-unlocking mechanism (50) is configured such that if the values detected by the concentration sensors (33) are each within the predetermined concentration range of an associated component of the inside air in which the door is locked, the door is locked, whereas if the values detected by the concentration sensors (33) are each within the predetermined concentration range of an associated component of the inside air in which the door is unlocked, the door is unlocked. However, a concentration display or a warning device may inform the operator that the oxygen concentration of the inside air is within the associated concentration range in which the door is locked or within the associated concentration range in which the door may be unlocked. This may avoid the locking-unlocking mechanism (50) from being provided.

While the embodiments and variations thereof have been described above, various changes in form and details may be made without departing from the scope of the claims.

### INDUSTRIAL APPLICABILITY

As can be seen from the foregoing description, the present disclosure is useful for a storage system.

### DESCRIPTION OF REFERENCE CHARACTERS

- 1: Storage System
- 10: Storeroom
- 15: Internal Fan
- 20: Inside Air Control System
- 30: Electric Component Box
- 31: Control Unit
- 33: Concentration Sensor
- 33a: Oxygen Sensor
- 33b: Carbon Dioxide Sensor
- 34: Ventilation Valve
- 46: Return Tube (Return Passage)
- 46a: Outlet End (Opening Inside storeroom)
- 47: Introduction Tube (Introduction Passage)
- 47a: Inlet End (Opening Inside storeroom)
- 48: Air Passage
- 50: Lock
- 51: Locking-Unlocking Mechanism
- 54: Air Passage
- 55: Introduction Passage
- 55a: Air Outflow Opening
- 56: Discharge Passage
- 56a: Air Outflow Opening
- 57: External Fan
- 58: Sensor Fan
- 60: Refrigerator
- 74: Water Discharge Tube
- O: External Space
- S: Internal Space

## Claims

1. A storage system comprising:
a storeroom (10); and an inside air control system (20) that regulates a composition of inside air in the storeroom (10),
the inside air control system (20) including
a pump unit (21), wherein a first gas outflow port (21a) of the pump unit (21) is connected through a first gas supply tube (42) to an air control valve (23) and a second gas outflow port (21b) of the pump unit (21) is connected to one end of a second gas supply tube (45), wherein the air control valve (23) is connected to a gas release tube (43) opening into the atmosphere and an air supply tube (44) that communicates with an internal space (S) of the storeroom (10);
a filter box (22),
concentration sensors (33) that detect concentrations of components of the inside air, the concentration sensors (33) including both of an oxygen sensor (33a) that detects an oxygen concentration of the inside air and a carbon dioxide sensor (33b) that detects a carbon dioxide concentration of the inside air;
the concentration sensors (33) being disposed outside the storeroom (10),
the storage system having an air passage (48, 54) that communicates with the internal space (S) of the storeroom (10) and the concentration sensors (33), wherein:
the inside air control system (20) is configured to allow outside air to pass through the filter box (22) and to be taken into the pump unit (21),
the pump unit (21) is configured to produce a supply gas having regulated oxygen concentration and carbon dioxide concentration through an adsorbent or separation membrane, the supply gas being supplied through the first gas supply tube (42) and the air supply tube (44) into the internal space (S) of the storeroom (10),
the second gas outflow port (21b) is configured to be closed to block the gas from the pump unit (21) toward the second gas supply tube (45) at a timing of detecting the oxygen concentration and the carbon dioxide concentration and to supply the inside air through an introduction tube (47) to the concentration sensors (33) and to return the inside air that has passed through the concentration sensor (33) through a return passage (46) into the internal space of the storeroom (10), and
while the oxygen concentration and the carbon dioxide concentration of the inside air are detected, the pump unit (21) is configured to be operated and a control unit (31) is configured to continuously control the pump unit (21) so that the inside air in the storage room (10) has an intended composition

2. The system of claim 1, wherein
the return passage (46) is connected to a water discharge tube (74) through which drain water is discharged to outside the storeroom.

3. The system of claim 1 or 2, wherein
an internal fan (15) is provided in the internal space (S),
an opening (47a) of the introduction passage (47) inside the internal space is disposed adjacent to an air blowout end of the internal fan (15), and
an opening (46a) of the return passage (46) inside the internal space is disposed adjacent to an air suction end of the internal fan (15).

4. The system of claim 3, wherein
the inside air control system (20) includes a control unit (31) that performs control to regulate the composition of the inside air, and
the control unit (31) performs control to regulate the composition of the inside air based on the values detected by the concentration sensors (33) and the associated target values, the values detected being obtained after a preset time period has elapsed since activation of the internal fan (15).

5. The system of claim 1 or 2, wherein
the air passage (54) includes:
an introduction passage (55) through which the inside air is introduced into the concentration sensors (33); and
a discharge passage (56) through which air is discharged from the concentration sensors (33) to an external space (O).

6. The system of claim 5 further comprising:
an external fan (57) disposed outside the storeroom (10), wherein
an air outflow opening (56a) of the discharge passage (56) is disposed adjacent to an air suction end of the external fan (57).

7. The system of claim 5, wherein
a sensor fan (58) that sends air to the concentration sensors (33) is disposed proximate to the concentration sensors (33), and
an air outflow opening (55a) of the introduction passage (55) is disposed adjacent to an air suction end of the sensor fan (58).

8. The system of claim 5, further comprising:
an electric component box (30); and
a ventilation valve (24) for use to ventilate an internal space of the electric component box (30), wherein
the concentration sensors (33) are disposed inside the electric component box (30), and
the introduction passage (55) passes through the ventilation valve (24).

9. The system of any one of claims 1 to 7 further comprising:
an electric component box (30), wherein
the concentration (33) are disposed inside the electric component box (30).

10. The system of any one of claims 1 to 9 further comprising:
a refrigerator (60) that cools the internal space (S) of the storeroom (10).

11. The system of any one of claims 1 to 10 further comprising:
a lock (50) fitted to a door of the storeroom (10); and
a locking-unlocking mechanism (51) that locks the door if a value detected by the concentration sensors (33) reaches a predetermined concentration of an associated component of the inside air in which the door is locked, and that unlocks the door if the value detected reaches a predetermined concentration of the associated component of the inside air in which the door is unlocked.

## Patentansprüche

1. Lagersystem, umfassend:
einen Lagerraum (10); und
ein Innenluftsteuersystem (20), das eine Zusammensetzung von Innenluft in dem Lagerraum (10) reguliert,
wobei das Innenluftsteuersystem (20) einschließt
eine Pumpeneinheit (21),
wobei eine erste Gasausströmöffnung (21a) der Pumpeneinheit (21) über ein erstes Gaszufuhrrohr (42) mit einem Luftsteuerventil (23) verbunden ist und eine zweite Gasausströmöffnung (21b) der Pumpeneinheit (21) mit einem Ende eines zweiten Gaszufuhrrohrs (45) verbunden ist,
wobei das Luftsteuerventil (23) mit einem in die Atmosphäre mündenden Gasablassrohr (43) und einem Luftzufuhrrohr (44) verbunden ist, das mit einem Innenraum (S) des Lagerraums (10) in Verbindung steht;
einen Filterkasten (22),
Konzentrationssensoren (33), die Konzentrationen von Komponenten der Innenluft erfassen, wobei die Konzentrationssensoren (33) sowohl einen Sauerstoffsensor (33a), der eine Sauerstoffkonzentration der Innenluft erfasst, als auch einen Kohlendioxidsensor (33b), der eine Kohlendioxidkonzentration der Innenluft erfasst, einschließen;
wobei die Konzentrationssensoren (33) außerhalb des Lagerraumes (10) angeordnet sind,
wobei das Lagersystem einen Luftdurchlass (48, 54) aufweist, der mit dem Innenraum (S) des Lagerraums (10) und den Konzentrationssensoren (33) in Verbindung steht, wobei:
das Innenluftsteuersystem (20) so konfiguriert ist, dass es ermöglicht, dass Außenluft den Filterkasten (22) passiert und in die Pumpeneinheit (21) geleitet wird,
die Pumpeneinheit (21) so konfiguriert ist, dass sie ein Zuführungsgas mit geregelter Sauerstoffkonzentration und Kohlendioxidkonzentration durch eine Adsorptions- oder Trennmembran erzeugt, wobei das Zuführungsgas durch das erste Gaszufuhrrohr (42) und das Luftzufuhrrohr (44) dem Innenraum (S) des Lagerraums (10) zugeführt wird,
die zweite Gasausströmöffnung (21b) so konfiguriert ist, dass sie geschlossen wird, um das Gas von der Pumpeneinheit (21) in Richtung des zweiten Gaszufuhrrohrs (45) zu einem Zeitpunkt der Erfassung der Sauerstoffkonzentration und der Kohlendioxidkonzentration zu blockieren und
die Innenluft durch ein Einführungsrohr (47) den Konzentrationssensoren (33) zuzuführen und
die Innenluft, die den Konzentrationssensor (33) passiert hat, durch einen Rückführungsdurchlass (46) in den Innenraum des Lagerraums (10) zurückzuführen, und
während die Sauerstoffkonzentration und die Kohlendioxidkonzentration der Innenluft erfasst werden, die Pumpeneinheit (21) so konfiguriert ist, dass sie betrieben wird, und eine Steuereinheit (31) so konfiguriert ist, dass sie die Pumpeneinheit (21) kontinuierlich steuert so dass die Innenluft in dem Lagerraum (10) eine beabsichtigte Zusammensetzung aufweist.

2. System nach Anspruch 1, wobei
der Rückführungsdurchlass (46) mit einem Wasserableitungsrohr (74) verbunden ist, durch das Ablaufwasser nach außerhalb des Lagerraums abgeleitet wird.

3. System nach Anspruch 1 oder 2, wobei
ein Innenventilator (15) in dem Innenraum (S) bereitgestellt ist,
eine Öffnung (47a) des Einführungsdurchlasses (47) im Inneren des Innenraums angrenzend an ein Luftausblasende des Innenventilators (15) angeordnet ist, und
eine Öffnung (46a) des Rückführungsdurchlasses (46) im Inneren des Innenraums angrenzend an ein Luftansaugende des Innenventilators (15) angeordnet ist.

4. System nach Anspruch 3, wobei
das Innenluftsteuersystem (20) eine Steuereinheit (31) einschließt, die eine Steuerung zur Regulierung der Zusammensetzung der Innenluft durchführt, und
die Steuereinheit (31) eine Steuerung zur Regulierung der Zusammensetzung der Innenluft auf der Grundlage der von den Konzentrationssensoren (33) erfassten Werte und der zugehörigen Zielwerte durchführt, wobei die erfassten Werte nach Ablauf einer voreingestellten Zeitspanne seit Aktivierung des Innenventilators (15) erhalten werden.

5. System nach Anspruch 1 oder 2, wobei
der Luftdurchlass (54) einschließt:
einen Einführungsdurchlass (55), durch den die Innenluft in die Konzentrationssensoren (33) eingeführt wird: und
einen Ableitungsdurchlass (56), durch den Luft von den Konzentrationssensoren (33) in einen Außenraum (O) abgeleitet wird.

6. System nach Anspruch 5, weiter umfassend:
einen Außenventilator (57), der außerhalb des Lagerraums (10) angeordnet ist, wobei
eine Luftausströmöffnung (56a) des Ableitungsdurchlasses (56) angrenzend an ein Luftansaugende des Außenventilators (57) angeordnet ist.

7. System nach Anspruch 5, wobei
ein Sensorventilator (58), der Luft zu den Konzentrationssensoren (33) sendet, in der Nähe der Konzentrationssensoren (33) angeordnet ist, und
eine Luftausströmöffnung (55a) des Einführungsdurchlasses (55) angrenzend an ein Luftansaugende des Sensorventilators (58) angeordnet ist.

8. System nach Anspruch 5, weiter umfassend:
einen Kasten für elektrische Komponenten (30); und
ein Belüftungsventil (24) zur Verwendung zum Belüften eines Innenraums des Kastens für elektrische Komponenten (30), wobei
die Konzentrationssensoren (33) im Inneren des Kastens für elektrische Komponenten (30) angeordnet sind und der Einführungsdurchlass (55) durch das Belüftungsventil (24) verläuft.

9. System nach einem der Ansprüche 1 bis 7, weiter umfassend: einen Kasten für elektrische Komponenten (30), wobei
die Konzentrationssensoren (33) im Inneren des Kastens für elektrische Komponenten (30) angeordnet sind.

10. System nach einem der Ansprüche 1 bis 9, weiter umfassend:
einen Kühlschrank (60), der den Innenraum (S) des Lagerraumes (10) kühlt.

11. System nach einem der Ansprüche 1 bis 10, weiter umfassend:
eine Verriegelung (50), die an einer Tür des Lagerraums (10) angebracht ist; und
einen Verriegelungs-/Entriegelungsmechanismus (51), der die Tür verriegelt, wenn ein von den Konzentrationssensoren (33) erfasster Wert eine vorbestimmte Konzentration einer zugehörigen Komponente der Innenluft erreicht, in der die Tür verriegelt ist, und der die Tür entriegelt, wenn der erfasste Wert eine vorbestimmte Konzentration der zugehörigen Komponente der Innenluft erreicht, in der die Tür entriegelt ist.

## Revendications

1. Système de stockage comprenant :
un entrepôt (10) ; et
un système (20) de commande d'air intérieur qui régule une composition d'air intérieur dans l'entrepôt (10),
le système (20) de commande d'air intérieur incluant
une unité pompe (21),
dans lequel un premier orifice (21a) d'écoulement sortant de gaz de l'unité pompe (21) est raccordé par un premier tube (42) de fourniture de gaz à une vanne (23) de commande d'air et un deuxième orifice (21b) d'écoulement sortant de gaz de l'unité pompe (21) est raccordé à une extrémité d'un deuxième tube (45) de fourniture de gaz, dans lequel la vanne (23) de commande d'air étant raccordée à un tube (43) de libération de gaz débouchant dans l'atmosphère et un tube (44) de fourniture d'air qui communique avec un espace interne (S) de l'entrepôt (10) ;
une boîte filtrante (22),
des capteurs (33) de concentration qui détectent des concentrations de composants de l'air intérieur, les capteurs (33) de concentration incluant à la fois un capteur (33a) d'oxygène qui détecte une concentration d'oxygène de l'air intérieur et un capteur (33b) de dioxyde de carbone qui détecte une concentration de dioxyde de carbone de l'air intérieur ;
les capteurs (33) de concentration étant disposés à l'extérieur de l'entrepôt (10),
le système de stockage présentant un passage (48, 54) d'air qui communique avec l'espace interne (S) de l'entrepôt (10) et les capteurs (33) de concentration, dans lequel :
le système (20) de commande d'air intérieur est configuré pour permettre à l'air extérieur de traverser la boîte filtrante (22) et d'être admis dans l'unité pompe (21),
l'unité pompe (21) est configurée pour produire un gaz d'alimentation présentant une concentration en oxygène et une concentration en dioxyde de carbone régulées à travers un adsorbant ou une membrane de séparation, le gaz d'alimentation étant apporté par le biais du premier tube (42) de fourniture de gaz et du tube (44) de fourniture d'air dans l'espace interne (S) de l'entrepôt (10),
le deuxième orifice (21b) d'écoulement sortant de gaz est configuré pour être fermé pour bloquer le gaz depuis l'unité pompe (21) vers le deuxième tube (45) de fourniture de gaz à un moment de détection de la concentration en oxygène et de la concentration en dioxyde de carbone et pour apporter l'air intérieur par le biais d'un tube d'introduction (47) aux capteurs (33) de concentration et pour ramener l'air intérieur qui a traversé le capteur (33) de concentration par un passage (46) de retour dans l'espace interne de l'entrepôt (10), et
alors que la concentration en oxygène et la concentration en dioxyde de carbone de l'air intérieur sont détectées, l'unité pompe (21) est configurée pour être actionnée et une unité (31) de commande est configurée pour commander en continu l'unité pompe (21) de telle sorte que l'air intérieur dans l'entrepôt (10) présente une composition prévue.

2. Système selon la revendication 1, dans lequel
le passage (46) de retour est raccordé à un tube (74) d'évacuation d'eau par lequel l'eau de drainage est évacuée à l'extérieur de la réserve.

3. Système selon la revendication 1 ou la revendication 2, dans lequel
un ventilateur interne (15) est prévu dans l'espace interne (S),
une ouverture (47a) du passage d'introduction (47) à l'intérieur de l'espace interne est disposée de manière adjacente à une extrémité de soufflage d'air du ventilateur interne (15), et
une ouverture (46a) du passage (46) de retour à l'intérieur de l'espace interne est disposée de manière adjacente à une extrémité d'aspiration d'air du ventilateur interne (15).

4. Système selon la revendication 3, dans lequel
le système (20) de commande d'air intérieur inclut une unité (31) de commande qui met en oeuvre une commande pour réguler la composition de l'air intérieur, et
l'unité (31) de commande met en oeuvre une commande pour réguler la composition de l'air intérieur sur la base des valeurs détectées par les capteurs (33) de concentration et des valeurs cibles associées, les valeurs détectées étant obtenues après qu'une période de temps prédéfinie s'est écoulée depuis l'activation du ventilateur interne (15).

5. Système selon la revendication 1 ou la revendication 2, dans lequel le passage (54) d'air inclut :
un passage (55) d'introduction par lequel l'air intérieur est introduit dans les capteurs (33) de concentration : et
un passage (56) d'évacuation par lequel l'air est évacué depuis les capteurs (33) de concentration vers un espace externe (O).

6. Système selon la revendication 5 comprenant en outre :
un ventilateur externe (57) disposé à l'extérieur de l'entrepôt (10), dans lequel
une ouverture (56a) d'écoulement sortant d'air du passage (56) d'évacuation est disposée de manière adjacente à une extrémité d'aspiration d'air du ventilateur externe (57).

7. Système selon la revendication 5, dans lequel
un ventilateur (58) de capteur qui envoie de l'air aux capteurs (33) de concentration est disposé à proximité des capteurs (33) de concentration, et
une ouverture (55a) d'écoulement sortant d'air du passage (55) d'introduction est disposée de manière adjacente à une extrémité d'aspiration d'air du ventilateur (58) de capteur.

8. Système selon la revendication 5, comprenant en outre :
une boîte (30) de composants électriques ; et
une vanne (24) de ventilation pour utilisation afin de ventiler un espace interne de la boîte (30) de composants électriques, dans lequel
les capteurs (33) de concentration sont disposés à l'intérieur de la boîte (30) de composants électriques, et le passage (55) d'introduction traverse la vanne (24) de ventilation.

9. Système selon l'une quelconque des revendications 1 à 7 comprenant en outre : une boîte (30) de composants électriques, dans lequel
les *capteurs (33) de concentration sont* disposés à l'intérieur de la boîte (30) de composants électriques.

10. Système selon l'une quelconque des revendications 1 à 9 comprenant en outre :
un réfrigérateur (60) qui refroidit l'espace interne (S) de l'entrepôt (10).

11. Système selon l'une quelconque des revendications 1 à 10 comprenant en outre :
un verrou (50) installé sur une porte de l'entrepôt (10) ; et
un mécanisme (51) de verrouillage-déverrouillage qui verrouille la porte si une valeur détectée par les capteurs (33) de concentration atteint une concentration prédéterminée d'un composant associé de l'air intérieur dans laquelle la porte est verrouillée, et qui déverrouille la porte si la valeur détectée atteint une concentration prédéterminée du composant associé de l'air intérieur dans laquelle la porte est déverrouillée.
